(19) Europäisches Patentamt
European Patent Office
Office européen des brevets

(11) **EP 2 876 589 A1**

(12) **EUROPEAN PATENT APPLICATION**

(43) Date of publication:
27.05.2015 Bulletin 2015/22

(51) Int Cl.:
*G06Q 10/06* (2012.01)

(21) Application number: 14003145.1

(22) Date of filing: 11.09.2014

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 21.11.2013 US 201314086033

(71) Applicant: Business Objects Software Ltd.
Dublin 1 (IE)

(72) Inventors:
• Tuta Osman, Ana Maria
69190 Walldorf (DE)
• Seguran, Magali
69190 Walldorf (DE)
• Senart, Aline
69190 Walldorf (DE)
• Trastour, David
69190 Walldorf (DE)

(74) Representative: Müller-Boré & Partner
Patentanwälte PartG mbB
Friedenheimer Brücke 21
80639 München (DE)

(54) **Recommendation system for specifying and achieving goals**

(57) Methods, systems, and computer-readable storage media for recommending one or more indicators to be monitored. In some implementations, actions include receiving user input, the user input indicating a measure selected by a user, identifying a plurality of dimensions corresponding to the measure, receiving goal data, the goal data being provided by the user, determining a rank for each dimension of the plurality of dimensions, each rank being determined based on a risk and a contribution associated with a respective dimension, the risk being determined based on the goal data, and providing dimensions of the plurality of dimensions for display to the user, the dimensions being displayed based on rank, each dimension filtering the measure to provide a respective filtered measure, the filtered measure being an indicator that can be monitored.

FIG. 6

EP 2 876 589 A1

## Description

### BACKGROUND

Many business and public organizations are goal-oriented, striving to maximize profit. Setting up goals can be a difficult task, and can often be done arbitrarily. In some cases, defining a goal would include developing sustainable and competitive advantages based on strategic resources. An example of strategic resources can include business data. However, businesses and public organizations acquire an enormous amount of business data, from internal and/or external sources. In the context of large datasets, it is particularly difficult for business users to have access to relevant information, especially for building sustainable advantages and defining future goals.

### SUMMARY

Implementations of the present disclosure include computer-implemented methods for recommending one or more indicators to be monitored. In some implementations, actions include receiving user input, the user input indicating a measure selected by a user, identifying a plurality of dimensions corresponding to the measure, receiving goal data, the goal data being provided by the user, determining a rank for each dimension of the plurality of dimensions, each rank being determined based on a risk and a contribution associated with a respective dimension, the risk being determined based on the goal data, and providing dimensions of the plurality of dimensions for display to the user, the dimensions being displayed based on rank, each dimension filtering the measure to provide a respective filtered measure, the filtered measure being an indicator that can be monitored.

In some implementations, the risk is determined based on a predicted trend and a threshold associated with the measure, the threshold being determined based on the goal data.

In some implementations, the threshold is further based on one or more known trends associated with the measure.

In some implementations, the risk is determined using a cumulative distribution function (CDF) based on the predicted trend and the threshold.

In some implementations, the contribution is determined based on a predicted trend and one or more known trends.

In some implementations, each dimension in the plurality of dimensions is a sub-dimension of a dimension selected by the user as a filter.

In some implementations, the goal data includes one or more of an amount, an orientation, a start data and an end date.

In some implementations, actions further include processing at least one of user information and measure information to identify a plurality of recommended measures, and providing, by the one or more processors, the plurality of recommended measures for display to the user, wherein the measure selected by the user is included in the plurality of recommended measures displayed to the user.

The present disclosure also provides a computer-readable storage medium coupled to one or more processors and having instructions stored thereon which, when executed by the one or more processors, cause the one or more processors to perform operations in accordance with implementations of the methods provided herein.

The present disclosure further provides a system for implementing the methods provided herein. The system includes one or more processors, and a computer-readable storage medium coupled to the one or more processors having instructions stored thereon which, when executed by the one or more processors, cause the one or more processors to perform operations in accordance with implementations of the methods provided herein.

It is appreciated that methods in accordance with the present disclosure can include any combination of the aspects and features described herein. That is, methods in accordance with the present disclosure are not limited to the combinations of aspects and features specifically described herein, but also include any combination of the aspects and features provided.

The details of one or more implementations of the present disclosure are set forth in the accompanying drawings and the description below. Other features and advantages of the present disclosure will be apparent from the description and drawings, and from the claims.

### DESCRIPTION OF DRAWINGS

FIG. 1 depicts an example architecture in accordance with implementations of the present disclosure.
FIG. 2 depicts an example process that can be executed in accordance with implementations of the present disclosure.

FIGs. 3-5 depict example user interfaces that can be provided in accordance with implementations of the present disclosure.

FIG. 6 depicts an example architecture for an example use case.

Like reference symbols in the various drawings indicate like elements.

## DETAILED DESCRIPTION

Implementations of the present disclosure are generally directed to recommending one or more indicators to be monitored for reaching a goal. More specifically, implementations of the present disclosure enable users to define accurate and realistic goals, and support user monitoring of the progress toward goals based on the one or more indicators that have been recommended. In some examples, implementations of the present disclosure provide a recommendation of a combination of measures and dimensions as one or more indicators in view of a defined goal. In some examples, recommended indicators are provided based on a plurality of parameters. Example parameters, which are discussed in further detail herein, include risk, contribution, threshold, trend, and prediction interval. In some examples, respective ranks are determined for a plurality of indicators based on respective parameters. In some examples, recommended indicators are displayed to the user based on the respective ranks.

In some implementations, recommended indicators are based on a user profile associated with a user, to which the goal is directed. In some examples, one or more measures can be recommended to the user based on the user profile, and recommended indicators can be determined based on a user-selected measure. In some examples, the user can be a data analyst (e.g., a supply chain manager, an enterprise resource planning manager, or a business intelligence manager). In some implementations, the profile of a user can include user-specific data that can be used to recommend indicators.

In some implementations, the user can select one or more measures and one or more dimensions from a recommended combination or from a list of available dimensions. In some examples, measures and/or dimensions can be presented to the user within a graphical user interface (GUI). A dimension can be a category of stored data, which stored data can include measures. Each dimension can filter a selected measure to provide a filtered measure. The combination of a measure in view of one or more dimensions can be provided as the recommended one or more indicators of the goal. Indicators can point to areas of improvement and can act as triggers for action for the user.

To provide context for discussion of implementations of the present disclosure, a brief discussion of example data and structuring of data is provided. In some implementations, data can be stored in a data object. An example data object can be provided as a data cube, e.g., an Online Analytical Processing (OLAP) data cube. In some examples, a data cube is provided as an array of data categorized into one or more dimensions. For example, and as discussed in further detail herein, a data cube can be a representation of a multi-dimensional spreadsheet, e.g., a multi-dimensional dataset including a plurality of data tables. In some examples, a data cube includes a plurality of cells, where cells are populated with respective values, e.g., number, text. In some examples, each value represents a particular measure, e.g., of a business, such as sales, revenue, profits, expenses, budget and forecast.

In some examples, a data cube can enable manipulation and/or analysis of data stored in the data cube from multiple perspectives, e.g., by dimensions, measures, and/or elements of the data cube. In some examples, a dimension of a data cube defines a category of stored data. Example dimensions can include time, location, and product. In some examples, each dimension can have one or more sub-dimensions. For example, the time dimension can include sub-dimensions of year, each sub-dimension of year can include sub-dimensions of quarter, each sub-dimension of quarter can include sub-dimensions of month, each sub-dimension of month can include sub-dimensions of week, and so on. As another example, the product dimension can include sub-dimensions of category, and each sub-dimension of category can include sub-dimensions of line. As another example, the location dimension can include sub-dimensions of country, each sub-dimension of country can include sub-dimensions of region, e.g., north, east, west, south, mid-west, each sub-dimension of region can include sub-dimensions of sub-region, e.g., state, province, and each sub-dimension of sub-region can include sub-dimensions of city. In some examples, a data cube can include three-dimensions. In some examples, a data cube having more than three-dimensions is referred to as a hypercube.

As noted above, data stored in the data object includes one or more measures. In some examples, each measure is a fact, e.g., a numerical fact, a textual fact. In some examples, each measure can be categorized into one or more dimensions. Example measures can include specific product sales data, e.g., quantity sold, revenue, and/or profit margin, categorized by dimension. In short, measures can include any appropriate operational data that may be manipulated according to business logic to assist or support the business enterprise.

In accordance with implementations of the present disclosure, one or more indicators can be recommended to a user to support the user in achieving a goal. In some examples, and in accordance with the context provided above, an indicator is provided as a measure (e.g., a measure selected by the user), which filtered based on a respective dimension or sub-dimension (e.g., dimension of a dimension). In other words, an indicator can be provided as a measure (e.g., user-selected measure) from the perspective of a recommended dimension (or sub-dimension).

For examples, a fictitious product "Cola" can be considered. In this example, a measure can include "Sales Growth" and values of that measure can be categorized in a dimension "Location," a dimension "Financial," and a dimension "Product." With respect to the dimension "Location," a sub-dimension "Country" can be provided, which can include further sub-dimensions such as "City," which can include further sub-dimensions (e.g., Madrid, Barcelona, Sevilla, etc.). With respect to the dimension "Sales," a sub-dimension "Sales type" can be provided, which can include a sub-dimension "Combo." With regard to the dimension "Product," a sub-dimension "Product type" can be provided, which can include further sub-dimensions (e.g., Cola, Cola Light, etc.).

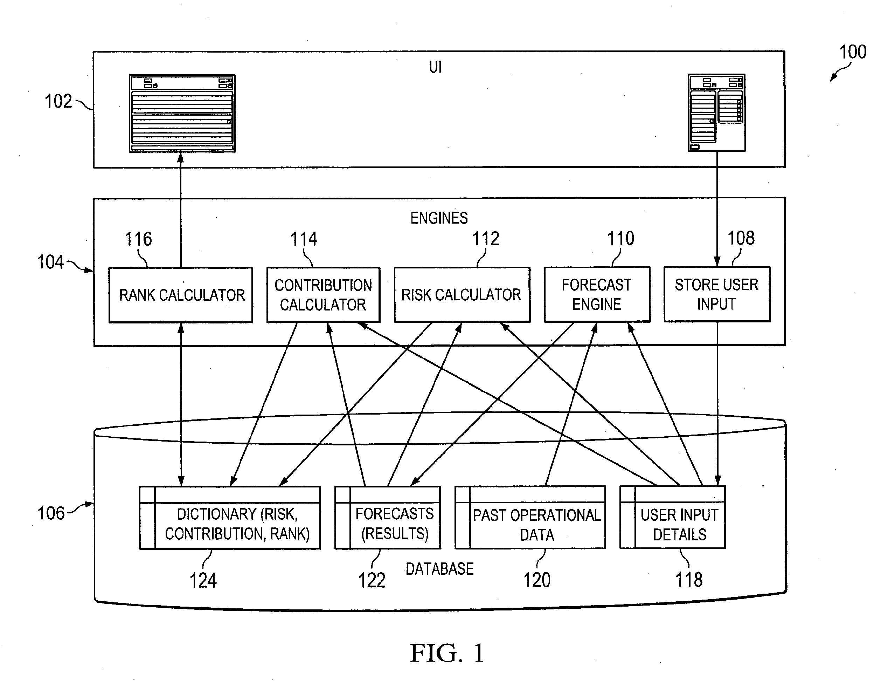

FIG. 1 depicts an example architecture 100 in accordance with implementations of the present disclosure. The example architecture 100 includes a GUI layer 102, an engine layer 104, and a database layer 106. In some examples, the example architecture 100 can be provided in a client-server system, in which one or more front-end clients communicate with one or more back-end servers. In some implementations, the GUI layer 102 can include one or more interfaces that can be displayed on one or more computing devices (e.g., client computing devices). Example computing devices can include desktop computers, laptop computers, smartphones, tablet computing devices, and the like. In some implementations, the engine layer 104 and the database layer 106 are provided by one or more server computing devices. In some examples, communication between the GUI layer 102, the engine layer 104, and the database layer 104 can be facilitated over one or more networks. Example networks can include a large computer network, such as a local area network (LAN), a wide area network (WAN), the Internet, a cellular network, a telephone network (e.g., PSTN) or an appropriate combination thereof connecting any number of communication devices, mobile computing devices, fixed computing devices and server systems.

In the depicted example, the engine layer 104 includes an engine 108 for storing user input, a forecast engine 110, a risk calculator engine 112, a contribution calculator engine 114, and a rank calculator engine 116. In some examples, each of the component 108, the forecast engine 110, the risk calculator engine 112, the contribution calculator engine 114, and the rank calculator engine 116 can be provided as one or more computer-executable programs that can be executed using one or more processors. In the depicted example, the database layer 106 includes user input data store 118, past operational data store 120, forecast data store 122, and dictionary data store 124. In some examples, each of the data stores can be provided as one or more tables.

In some implementations, one or more engines of the engine layer 104 can communicate with data of the database layer 106. In some examples, data is automatically retrieved (e.g. at particular intervals) or selectively retrieved by one or more engines of the engine layer 104 from one or more sources, processed and stored in the database 106. In some examples, a user interacts with a GUI of the GUI layer 102 to generate input data that is provided to the engine layer 104. In some examples, user input can include an operational goal, a timeframe, an orientation, a measure, a dimension, and a prediction error tolerated by the user. In some examples, the operational goal can be a quantitative value, e.g., a percentage. In some examples, the orientation can indicate an increase or a decrease in a value. In some examples, the dimension, discussed in further detail herein, can be a geographical location, a machine, a product, a time or a financial aspect associated with the goal. The prediction error tolerated by the user can be a quantitative value, for example a percentage of the goal.

With continued reference to FIG. 1, the engine 108 can receive data that has been input through a GUI of the GUI layer 102, and can provide the data for storage in the user input data store 118. In some examples, user input data of the user input data store 118 can be provided to (e.g., retrieved by) tone or more engines of the engine layer 104 (e.g., the forecast engine 110, the risk calculator engine 112, and/or the contribution calculator engine 114).

In the example of FIG. 1, the forecast engine 110 can receive user input data and past operational data (e.g., stored in the past operational data store 120). In accordance with implementations of the present disclosure, the forecast engine 110 can process the user input data and the past operational data to generate a forecast based on a prediction algorithm. In some examples, the user input data processed by the forecast engine 110 does not include goals and orientation. In some examples, the forecast includes a forecast of operational data that can be stored in the forecast data store 122. In some implementations, the prediction algorithm processed by the forecast engine 110 can be based on an exponential smoothing algorithm.

In some implementations, the risk calculator engine 112 can determine a risk associated with the forecast. In some examples, the risk calculator engine 112 processes the forecast of operational data and user input data to determine the risk. In some examples, the user input data includes the goal and the orientation provided from the user input. In some examples, the risk can be provided as the probability of a predicted indicator to be above or below a certain threshold. In some examples, the threshold can be based on one or more known trends associated with a measure. For example, the threshold can be the minimum value or a maximum value that is established for an indicator (e.g., attribute, characteristic, or parameter). In some examples, a variance can be provided as a difference between the threshold and a previous trend. In some examples, the threshold and the variance can serve as a benchmark for comparison of trends.

In some examples, the risk can be proportional to a distance of the predicted indicator from the provided threshold. For example, the risk can be determined using a Cumulative Distribution Function (CDF) based on the predicted trend and the threshold. In some examples, a predicted trend can be a pattern of gradual change in condition, output, or process, or an average or general tendency of a series of data points to move in a certain direction over time. In some examples, a trend can be visually represented by a line or curve on a graph. The predicted trend can be calculated using prediction (forecasting) methods. In some examples, a risk calculated by the risk calculator engine 112 can be stored in the dictionary data store 124.

In some implementations, the contribution calculator engine 114 can receive user input data and forecast data. In some examples, the user input data includes the goal and the orientation. In some examples, the user input data and the forecast data are processed by the contribution calculator engine to determine a contribution associated with a respective indicator, which contribution can be stored in the dictionary data store 124. In some examples, the contribution of an indicator can be described as the relative importance of the respective indicator in reaching the selected goal. In some implementations, the contribution can be determined by the contribution calculator engine 114 based on a predicted trend and one or more known trends. An example relationship can be provided as:

$$\text{contribution} = (\text{predicted trend} - \text{past trend})/\sum(\text{predicted trend} - \text{past trend}).$$

In some implementations, the rank calculator engine 116 can receive risk and contribution data associated with a respective indicator from the dictionary data store 124. In some examples, the rank calculator can process the risk and contribution data to determine a rank of a respective indicator (e.g., dimension). In some implementations, the rank of an indicator can be a relative position or degree of value within the range of existing indicators. In some examples, the rank calculator 116 can determine the rank of an indicator based on a level of risk associated with the indicator and the contribution in reaching the defined goal. An example relationship can be provided as:

$$\text{rank} = \text{risk} * \text{contribution}$$

In some examples, the rank calculator 116 can store the determined rank in the dictionary data store 124. In some examples, and as discussed in further detail herein, one or more indicators and respective ranks can be displayed to the user in a GUI at the GUI layer 102.

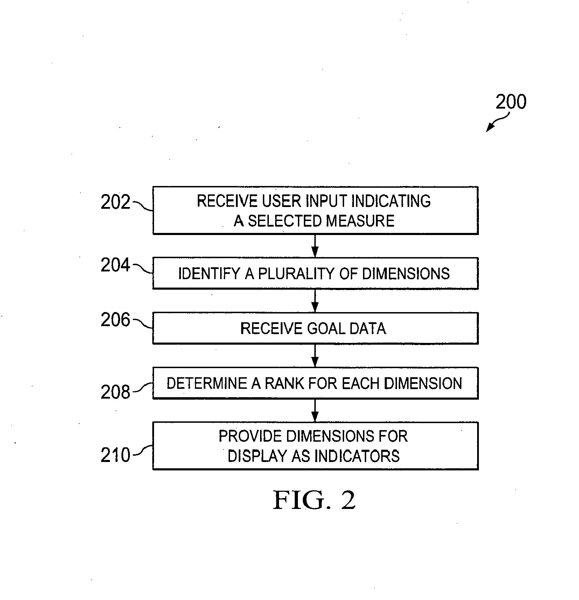

FIG. 2 depicts an example process 200 that can be executed in accordance with implementations of the present disclosure. In some examples, the example process 200 can be provided as one or more computer-executable programs executed using one or more computing devices. In some examples, the example process 200 is executed for recommending indicators that can be monitored for defining and reaching the goal of a user.

User input indicating a selected measure is received (202). For example, a user can interact with a GUI to select a measure from one or more displayed measure. A plurality of dimensions corresponding to the measure is identified (204). In some examples, and as discussed above, the measure can be stored as data in a data object, which data object can include one or more dimensions. Consequently, and in some example, the plurality of dimensions corresponding to the measure can be determined from the data object. Goal data is received (206). For example, user input indicating the goal data is received.

A rank is determined for each dimension of the plurality of dimensions (208). In some implementations, each rank can be determined based on a risk and a contribution associated with a respective dimension. The risk can be determined based on a predicted trend and a threshold associated with the measure, the threshold being determined based on the goal data. Dimensions are provided for display as respective indicators (210). In some examples, the dimensions can be provided for display in a GUI presented to the user. In some examples, dimensions can be displayed based on rank. In some implementations, and as discussed above each dimension filters the measure to provide a respective filtered measure. The filtered measure can be an indicator that can be monitored over the selected timeframe (e.g., a timeframe associated with the goal). In some implementations, an alert can be triggered if the variation of the indicator exceeds the corresponding threshold. In some implementations, one or more recommended actions can be displayed for each indicator.

Implementations of the present disclosure may be discussed with reference to an example use case. More specifically, the example use case includes a sales executive, who aims to increase the sale of a fictitious product (e.g., "Cola"). In particular, the example sales executive Bob can interact with a GUI to provide user input indicating a goal of increasing sales of Diet Cola by 10% in the first trimester of the coming year, e.g., January 2014 to March 2014. Although implementations of the present disclosure are discussed in further detail with reference to the above-described example, it is appreciated that implementations of the present disclosure are applicable in any other appropriate use case.

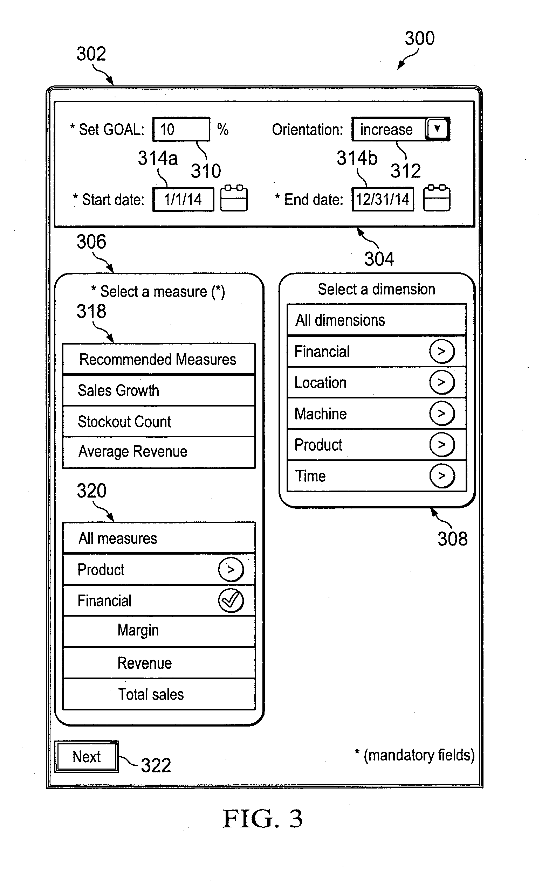

FIGs. 3-5 depict example user interfaces that can be provided in accordance with implementations of the present disclosure. More particularly, the example use case discussed above, will be explained in further detail with reference to FIGs. 3-5.

In some implementations, a user (e.g., Bob) can log into a system that is configured to execute implementations of the present disclosure. For example, using a computing device (e.g., a tablet), the user can provide credentials (e.g., username, password) that can be used to authenticate the user to the system. In some examples, a screen can be displayed to the user to provide a GUI, through which the user can define a goal.

FIG. 3 depicts an example screen-shot 300 depicting an example GUI 302 for selecting a measure and defining a goal for the selected measure. In some implementations, GUI 302 can be displayed to a user logged into the system, and can display measures and dimensions that are relevant to the particular user. For example, the GUI 302 can be populated with contextual data retrieved from a user profile. In some examples, the contextual data can be required during the login phase or it can be retrieved from a database.

In the depicted examples, the GUI 302 includes a goal data interface 304, a measure selection menu 306, and a dimension selection menu 308. In the depicted examples, the goal data interface 304 includes a "set goal" text box 310, an "orientation" drop down menu 312, and a pair of date selection text boxes 314a, 314b (e.g., pop-up calendars). The measure selection menu 306 includes a "recommended measures" sub-menu 318 and an "all measures" sub-menu 320. The GUI 302 also includes a "next" button 322.

The user can define a goal for a target measure by providing input to the GUI 302. For example, a quantitative value of the goal can be entered into and displayed within the text box 310. The user can select (e.g., click on) the orientation of the defined goal from the options included in the drop down menu 312 to define an orientation (e.g., increase, decrease, maintain) associated with the goal. The user can define a timeframe for the goal by either selecting the dates in pop-up calendars, or by entering the dates in the "start date" text box 314a and the "end date" text box 314b. The user can select a measure and/or dimension of a measure that the goal is directed to using the measure selection menu 306 and/or the dimension selection menu 308.

Within the context of example discussed above, Bob can provide user input to define a goal of increasing sales growth by 10% from January 2014 to December 2014. More particularly, Bob can select the measure "Sales Growth" from the recommended measures sub-menu 318, can input "10" in the text box 310, can select "increase" in the menu 312, and can set start and end dates in the respective boxes 314a, 314b. After the user is satisfied with the input provided to the GUI 302, the user can select the "Next" button 322 to progress to recommended indicators.

In some implementations, measures displayed in the "recommended measures" sub-menu 318 can be recommendations that are specific to the user. In some examples, information associated with the user (e.g., from the user profile, from historical data associated with the user) can be processed to determine the measures that are to be displayed in the sub-menu 318. The techniques used for retrieving relevant measures and ranking them can be based on user profiling. In some implementations, the recommendation techniques can include clustering techniques and/ or Bayesian interface.

In some implementations, the user profile is provided as information about the user (e.g., manually inserted into the user profile) and past actions of the user (e.g., automatically inserted into the user profile). For example, user profile information can include personal details about the user (e.g., name, address, birthdate) and other relevant demographics. In an enterprise context, the user profile information can include the user's title within the enterprise, one or more responsibilities of the user within the enterprise (e.g., sales, marketing), and/or one or more entities that the user may be responsible for. Example entities can include other users (e.g., the user can be a manager that is responsible for one or more other employees), and regions (e.g., a geographical region, for which the user is responsible).

In some examples, past actions (historical data) associated with the user can be provided in the user profile. In some examples, past actions can be recorded by a user monitoring system. Example user actions can include the user's previous definition of one or more goals, the user's previous selection of one or more measures, the user's previous selection of one or more recommended indicators, one or more tasks performed by the user (e.g., ordered X quantity of a product for a particular location). It is appreciated, however, that implementations of the present disclosure can include any appropriate user actions.

In some implementations, discussed in further detail below, one or more filtering techniques can be applied based on the user profile in order to retrieve and to rank measures that are to be recommended to the user. In this manner, measures that are relevant for the particular user are recommended.

In some examples, information may be lacking from a user profile (e.g., in the case of a new user). In some implementations, and to overcome a lack of user profile information, measures can be recommended based on contextual information (e.g., job title, location), where measures that are selected more often by other, similarly situated users can be provided as the recommended measures.

In some examples, after information about the user has been filled in and/or a record of historical user actions is available, recommendations can be provided based on a determined level of relevance for the each measure to the user. In some implementations, content-based filtering techniques can be applied to provide the recommended measures. In some implementations, collaborative filtering techniques can be applied to provide the recommended measures. In some implementations, a hybrid approach can be used by combining content-based filters with collaborative filters.

With regard to content-based filtering, content based recommendation systems can depend on information provided in user profiles for making recommendations. In some examples, and as introduced above, a user profile includes information about a user and their past actions, for example. Based on the information provided in the user profile, a content-based recommendation system can make predictions on whether a specific item (e.g., measure) is of interest to the respective user. For example, measures related to sales can be determined to be of interest to a user that is part of a sales team and/or that has previously selected a sales measure. In some examples, content-based filtering can be achieved based on profile-centric matching. In some examples, and with respect to profile-centric matching, all of the metadata assigned to a user is collected in the user profile for capturing all of the user's interests. On the other hand, item profiles (e.g., measures profiles) are also created by aggregating all the tags made by the users in the training set. A matching between the user profile and the item profiles is performed. After removing the items which are already in the active user profiles, the final rank-ordered list of recommendations is created.

In some implementations, collaborative-based filtering can include memory-based techniques and model-based techniques. In some examples, memory-based techniques can include user-centric techniques and item-centric (e.g., measure-centric) techniques. In some examples, user-centric means that the recommendations are done based on user profiling. In this case, when making recommendations, the recommendation system searches for common preferences among all users for creating groups. In some examples, if one item (e.g., measure) was positively rated by the other users of the same group, then that item will also be recommended to the selected user. For examples, users that are part of a sales team can often select measures related to sales. Consequently, sales-related measures can be recommended to a user that is also part of a sales team. In some examples, item-centric techniques are based on the assumption that user selections remain constant or change insignificantly. In some examples, groups of items (e.g., measures) are created based on appreciations of users (e.g., determined through user selections, user provided ratings). In some examples, the user is provided with a list of items (e.g., measures), which are in the same group as the items that the user has already selected and/or used. In some examples, user-based and item-based techniques can be combined.

In some implementations, one or more algorithms can be provided in model-based techniques. Example algorithms can include nearest neighbor (e.g., user-based filtering and item-based filtering), Euclidian distance (e.g., similarity score calculation), Pearson correlation (e.g., similarity score calculation), Bayesian-Network modeling, cluster modeling, and probabilistic latent semantic analysis (e.g., sLSA).

In some implementations, hybrid techniques can be provided. In this manner, potential of individual techniques can be maximized by using a mixture of content-based and collaborative filtering techniques. In some examples, the techniques can be individually executed and the results of each technique can be joined. In some examples, one or more rules of content-based filtering can be used in collaborative filtering. In some examples, one or more rules of collaborative filtering can be used in content-based filtering. In some examples, a unified filtering technique can be provided that brings together both approaches.

In some implementations, and as introduced above, context-based techniques can be provided (e.g., in cases where user profile information is lacking). In some examples, context can be provided as all of the information available about the environment of a user and details about a current state of the user (e.g., as opposed to the content information which is saved in profiles). Consequently, context changes dynamically and is often only temporarily saved, as it loses its meaning after a period of time. Contextual information about items (e.g., measures) and users can be represented in a contextual graph. Items, users and contextual information represent nodes in the graph, while the edges constitute the ratings of items and/or similarity between users. In some examples, contextual information can be obtained through direct interaction with the user (e.g., have the user fill out a survey before making recommendations), using implicit information (e.g., location information gathered with GPS devices), and/or analyzing users by observing their behavior or using data mining techniques.

Context-aware recommender systems can noticeably increase the quality of recommendations. In some examples, one or more sub-techniques can be provided for context-based approaches. Example sub-techniques can include contextual pre-filtering (e.g., data is selected before making predictions), contextual post-filtering (e.g., filtering is done after the predictions are completed), and modeling (e.g., contextual information is used in the prediction process). In some examples, a pre-filtering approach that is based on item splitting can be provided. For example, this pre-filtering approach can be provided as an extension of collaborative-filtering.

In some implementations, semantic-based techniques can be provided. In some examples, semantic-based techniques can implement concept diagrams (e.g. taxonomy) or ontologies. In some examples, taxonomy includes classification of items and users based on domains and groups. In some examples, when taxonomy is too difficult or too expensive to be implemented, other solutions can be used. One example includes folksonomies (e.g., folks + taxonomy), which provides sorting of items based on tags users have added to them. In some examples, the most frequent and popular tags become categories of items. Furthermore, tags can be related with each other using ontologies, which can be provided as a hierarchically structured set of terms for describing a domain that can be used as a skeletal foundation for a knowledge base. In some examples, ontologies can be provided as the basic terms and relations that make up the vocabulary of a topic area. By using semantic analysis and ontological mechanisms, recommender systems can better understand the relation between items (e.g., measures) and users, like creating a semantic neighborhood among ontological profiles.

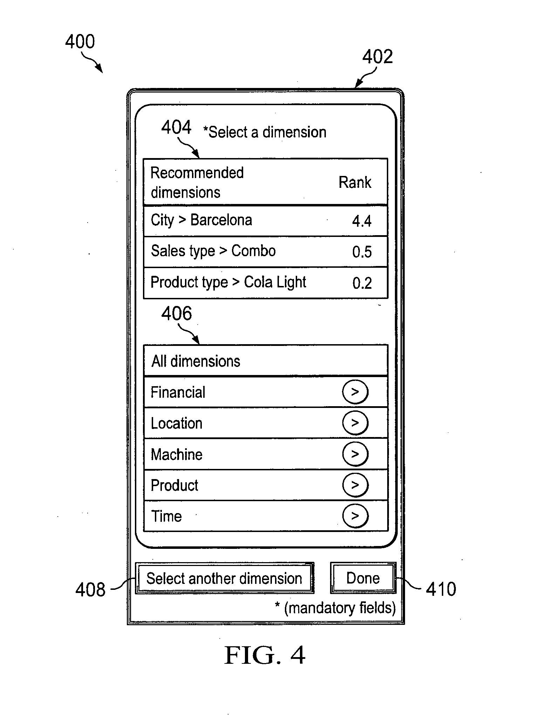

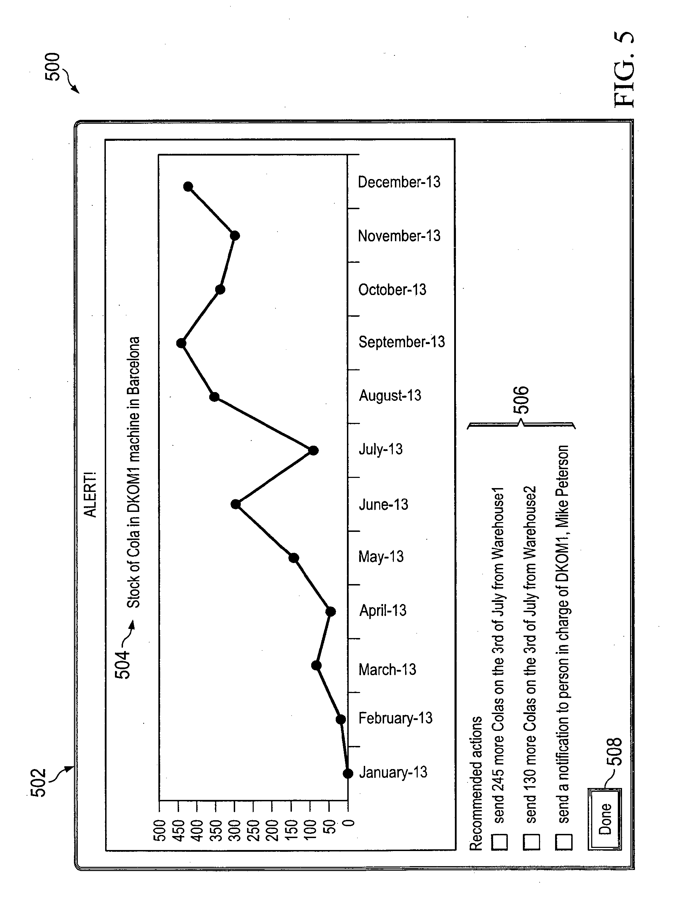

Referring again to FIG. 3, the measures listed in the "all measures" sub-menu 320 can include measures that are not specific to the particular user. Instead, measures displayed in the sub-menu 320 can include all available measures. In the depicted example, the "financial" measure has been selected by the user. The selection of a measure can cause the display of a set of sub-measures. Within the context example, the set of sub-measures corresponding to the "financial" measure includes "margins," "revenue" and "total sales." The selection of a measure from the "recommended measures" menu 318 or the "all measures" menu 320 enables the one or more processors to provide more recommendations, as discussed with reference to FIGs. 2 and 4. The user interacting with the dimension selection menu 308 can select a dimension. The selection of a dimension indicates a filter that can restrict the scope of the selected measure, and hence the scope of indicators to be recommended to the user. The selection of a dimension can cause the display of a different GUI, described with reference to FIG. 4. In some implementations, one or more components of the GUI 302 constitute mandatory fields. The mandatory fields can be highlighted (e.g. marked by as asterisk). In some implementations, a user can activate a "next" button 322, only after the mandatory fields are filled. The activation of the "next" button 322 can cause the generation of an output, as discussed with reference to FIG. 5.

FIG. 4 depicts an example screen-shot 400 of an example GUI 402 for displaying recommended indicators (e.g., recommended dimensions, sub-dimensions for the selected measure), and for enabling user-selection of a recommended indicator. In some implementations, the GUI 402 can be displayed in response to user-selection of the button 322, as described above with reference to FIG. 3. The GUI 402 can be populated with recommended indicators that are identified as discussed above with reference to FIG. 1. For example, a respective rank can be determined for each of a plurality of dimensions based on the user input, past operational data, and forecast data.

In the depicted example, the GUI 402 includes a "recommended dimensions" selection menu 404, an "all dimensions" selection menu 406, a "select another dimension" button 408, and a "done" button 410. The "recommended dimensions" selection menu 404 can include the recommended one or more dimensions. The dimensions displayed in the "recommended dimensions" selection menu 404 can be selected based on the rank of the dimensions. As discussed above, the rank of the dimensions can be calculated based on the risk of each indicator not to reach a certain threshold and the contribution of the dimension in the total goal. In some implementations, the determined rank is displayed for each dimension. Within the context of the example, the "recommended dimensions" selection menu 404 includes dimension "city > Barcelona", having a rank of 4, dimension "sales type > combo" having a rank of 0.5 and the dimension "product type > Diet Cola" having a rank of 0.2.

The dimensions listed in the "all dimensions" selection menu 406 can include general categories of dimensions, such as "financial," "location," "machine," "product," and "time." In some implementations, one or more dimensions listed in the "all dimensions" selection menu 406 can include one or more sub-dimensions. The user can select a dimension from the "recommended dimensions" selection menu 404, from the "all dimensions" selection menu 406 or from a list of other possible dimensions accessed by activating the "select another dimension" button 408.

In some implementations, selection of a dimension causes the system to create corresponding data sets and to save them in a database (e.g. database 106 in FIG. 1) for repeated access. The combination of the selected measures, filters and dimensions can define the indicator, which can be monitored for and/or by the user to assist the user in achieving the user-defined goal. In some implementations, the selection of a dimension followed by the activation of the "done" button 410 can induce monitoring of the goal in view of the selected indicator(s).

Within the context of the example, the recommended indicators include "sales growth in the city of Barcelona" with a rank of 4.4, "average revenue by machine for combo sales type" with a rank of 0.5, and "stock-out count for Diet Cola type of product" with a rank of 0.2. The rank for the indicator "sales growth in the city of Barcelona" can be determined using the equations described with reference to FIG. 1, which can be applied as described in further detail below.

In the provided example, the goal is set to 10%. In some examples, a future trend can be calculated as equal to 23.5, and the variance can be calculated as equal to 2. In some examples, the threshold can be numerically expressed as:

$$\text{threshold} = 20 *(1 + 10\%) = 22$$

The risk can be numerically expressed as:

$$\text{risk} = \int_{-\infty}^{\infty} f(t)dt = 0.22$$

EP 2 876 589 A1

The contribution can be numerically expressed as:

$$contribution = 20 / 100 = 0.2$$

Consequently, the rank can be numerically expressed as:

$$rank = 0.22 * 0.2 * 100 = 4.4$$

In some implementations, a user interacting with GUI 402 can only see the numerical output of the rank, without the intermediate results.

FIG. 5 depicts an example screen-shot 500 displaying an example GUI 502. In some examples, the GUI 502 can be displayed in response to monitoring of a goal based on the indicator(s) selected by the user (e.g., from the GUI 402). In some examples, the GUI 502 is provided by an application, or a component of an application, which enables the user to perform a function, or access a service. The GUI 502 can include a plot of an indicator 504, a "recommended actions" selection menu 506, and a "done" button 508.

In some implementations, the plot of the indicator 504 corresponds to the selected timeframe. The X axis of the plot of the indicator 504 can be a time axis including the selected timeframe. For example, the plot of the indicator 504 can cover past, present and predicted data. The Y axis of the plot of the indicator 504 can correspond to the a measure (e.g., the selected indicator). Within the context example, the plot of the indicator 504 can illustrate the variation of stock of Diet Cola in a particular machine, in Barcelona from January 2014 to December 2014. For example, in a modified example, a user-defined goal can include increasing sales by 10% during the year 2014.

The plot of the measures 504 can enable the user to monitor the progress of the defined indicator and to take actions when needed. In some examples, the depicted measure 504 can be a measure that influence achievement of the goal. For example, the user can select one or more actions from the "recommended actions" selection menu 506. In some implementations, the selection of an action can cause the delivery of a message, performance of a function, or initiation of a service. In some implementations, the system can autonomously monitor the indicators variation over time. The system can be set to generate alerts if the indicator exceeds the prediction error tolerated by the user, the variance or the threshold. Within the context example, an alert can be sent to a salesman to monitor the stock of Diet Cola in a particular machine, in Barcelona, which decreased to a critical level. In some implementations, the alerts can support the user to perform an action at a critical time in the timeframe, to decrease the risk of the indicator exceeding the prediction error tolerated by the user.

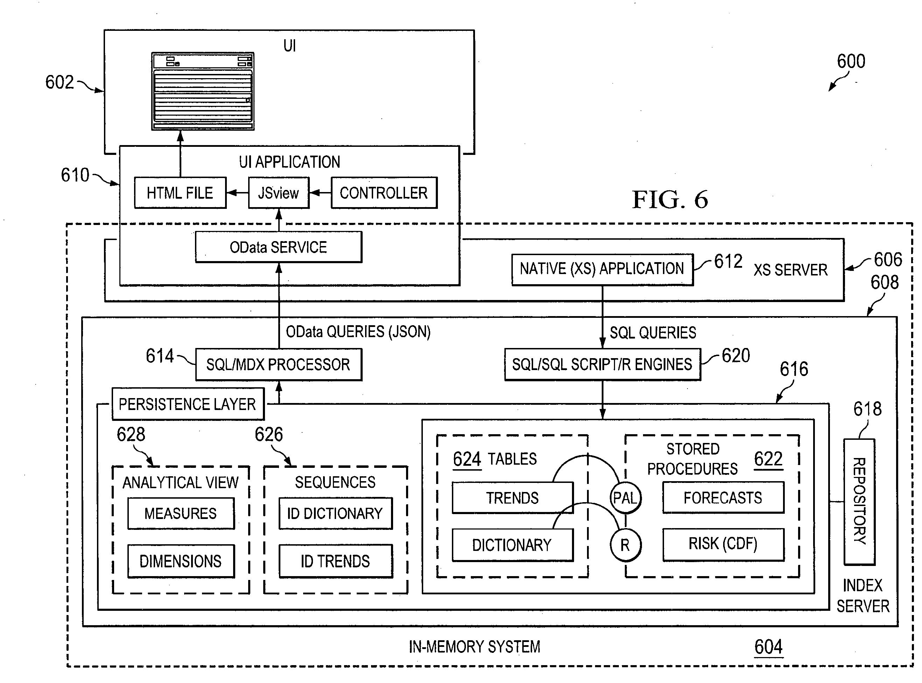

FIG. 6 depicts an example architecture 600 that can be used to provide implementations of the present disclosure. The example architecture 600 can be used for the operations described in association with the implementations described herein. The architecture 600 includes a layer GUI 602 and a system 604. In some examples, the system 604 can be provided as an in-memory system. An example in-memory system can include the SAP HANA System provided by SAP AG of Walldorf, Germany. In the depicted example, the system 604 includes an extended application services (XS) server 606 and an index server 608. The XS server 606 can host an application 610 that can be accessible from a local host and a native application 612. The index server 608 can include a processor 614, a persistence layer 616, a repository 618 and engine 620. The persistence layer 616 can store procedures 622, tables 624, sequences 626 and an analytical view 628.

For purposes of illustration, and as discussed in further detail herein, a user can interact with a GUI provided at the GUI layer 602 to receive a recommendation of one or more indicators to be monitored. The model for recommending one or more indicators can be implemented in the native application 612 hosted by the XS server 606. In some examples, the GUI provided at the GUI layer 602 includes interaction elements such as dialogue boxes and clickable buttons that enable the user to provide input to the native application 612. The native application 612 can be a script. The native application 612 can generate queries (e.g., SQL queries) to call one or more stored procedures executed at the database level (the index server 608). One example procedure executed at the database level can include the calculation of forecasts (e.g., predicted trends). Another example procedure executed at the database level can include the calculation of the risk and the contribution. The risk and the contribution can be calculated in the engine 620 for optimization.

In some implementations, the input for the stored procedures can be found in the repository 618. The repository 618 can be configured to store the user input data and derived data. The repository 618 can transmit the identified measures and dimensions selected by the user to the processor over the persistence layer 616. The persistence layer 616 can be configured to manage and access data including stored procedures 622, tables 624, sequences 626 and an analytical view 628. In some implementations, the recommendation request generated by the user interacting with the GUI 602 can be processed by the application 610. The application 610 can be hosted by the XS server 606. The

9

application 610 can use an open data protocol service for querying the persistence layer 616. The querying can be performed through sequences 626, defined for the service (e.g., ID dictionary and ID trends).

Implementations of the subject matter and the operations described in this specification can be realized in digital electronic circuitry, or in computer software, firmware, or hardware, including the structures disclosed in this specification and their structural equivalents, or in any appropriate combinations thereof. Implementations of the subject matter described in this specification can be realized using one or more computer programs, i.e., one or more modules of computer program instructions, encoded on computer storage medium for execution by, or to control the operation of, data processing apparatus, e.g., one or more processors. In some examples, program instructions can be encoded on an artificially generated propagated signal, e.g., a machine-generated electrical, optical, or electromagnetic signal that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially generated propagated signal. The computer storage medium can also be, or be included in, one or more separate physical components or media (e.g., multiple CDs, disks, or other storage devices).

The operations described in this specification can be implemented as operations performed by a data processing apparatus on data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. In some examples, the data processing apparatus can include special purpose logic circuitry, e.g., an FPGA (field programmable gate array) or an ASIC (application specific integrated circuit). In some examples, the data processing apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor will receive instructions and data from a read only memory or a random access memory or both. Elements of a computer can include a processor for performing actions in accordance with instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

To provide for interaction with a user, implementations of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Implementations of the subject matter described in this specification can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

While this specification contains many specific implementation details, these should not be construed as limitations on the scope of any implementation of the present disclosure or of what may be claimed, but rather as descriptions of features specific to example implementations. Certain features that are described in this specification in the context of separate implementations can also be implemented in combination in a single implementation. Conversely, various features that are described in the context of a single implementation can also be implemented in multiple implementations separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described program components and systems can generally be integrated together in a single software product or packaged into multiple software products.

Thus, particular implementations of the subject matter have been described. Other implementations are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

**Claims**

1. A computer-implemented method for recommending one or more indicators to be monitored, the method being executed using one or more processors and comprising:

   receiving, by the one or more processors, user input, the user input indicating a measure selected by a user;
   identifying, by the one or more processors, a plurality of dimensions corresponding to the measure;
   receiving, by the one or more processors, goal data, the goal data being provided by the user;
   determining, by the one or more processors, a rank for each dimension of the plurality of dimensions, each rank being determined based on a risk and a contribution associated with a respective dimension, the risk being determined based on the goal data; and
   providing dimensions of the plurality of dimensions for display to the user, the dimensions being displayed based on rank, each dimension filtering the measure to provide a respective filtered measure, the filtered measure being an indicator that can be monitored.

2. The method of claim 1, wherein the risk is determined based on a predicted trend and a threshold associated with the measure, the threshold being determined based on the goal data.

3. The method of claim 1 or claim 2, wherein the threshold is further based on one or more known trends associated with the measure.

4. The method of any one of claims 1 to 3, wherein the risk is determined using a cumulative distribution function (CDF) based on the predicted trend and the threshold.

5. The method of any one of claims 1 to 4, wherein the contribution is determined based on a predicted trend and one or more known trends.

6. The method of any one of claims 1 to 5, wherein each dimension in the plurality of dimensions is a sub-dimension of a dimension selected by the user as a filter.

7. The method of any one of claims 1 to 6, wherein the goal data comprises one or more of an amount, an orientation, a start data and an end date.

8. The method of any one of claims 1 to 7, further comprising:

processing, by the one or more processors, at least one of user information and measure information to identify a plurality of recommended measures; and
providing, by the one or more processors, the plurality of recommended measures for display to the user, wherein the measure selected by the user is included in the plurality of recommended measures displayed to the user.

9. A non-transitory computer-readable storage medium coupled to one or more processors and having instructions stored thereon which, when executed by the one or more processors, cause the one or more processors to perform operations according to the method of any one of claims 1 to 8.

10. A system, comprising:

a computing device; and
a computer-readable storage device coupled to the computing device and having instructions stored thereon which, when executed by the computing device, cause the computing device to perform operations for recommending one or more indicators to be monitored, the operations comprising:

receiving user input, the user input indicating a measure selected by a user;
identifying a plurality of dimensions corresponding to the measure;
receiving goal data, the goal data being provided by the user;
determining a rank for each dimension of the plurality of dimensions, each rank being determined based on a risk and a contribution associated with a respective dimension, the risk being determined based on the goal data; and
providing dimensions of the plurality of dimensions for display to the user, the dimensions being displayed based on rank, each dimension filtering the measure to provide a respective filtered measure, the filtered measure being an indicator that can be monitored.

11. The system of claim 10, wherein the risk is determined based on a predicted trend and a threshold associated with the measure, the threshold being determined based on the goal data.

12. The system of claim 10 or claim 11, wherein the threshold is further based on one or more known trends associated with the measure.

13. The system of any one of claims 10 to 12, wherein the risk is determined using a cumulative distribution function (CDF) based on the predicted trend and the threshold.

14. The system of any one of claims 10 to 13, wherein the contribution is determined based on a predicted trend and one or more known trends.

15. The system of any one of claims 10 to 14, wherein operations further comprise:

processing at least one of user information and measure information to identify a plurality of recommended measures; and
providing the plurality of recommended measures for display to the user,
wherein the measure selected by the user is included in the plurality of recommended measures displayed to the user.

EP 2 876 589 A1

100

UI

102

ENGINES

104

116
RANK CALCULATOR

114
CONTRIBUTION CALCULATOR

112
RISK CALCULATOR

110
FORECAST ENGINE

108
STORE USER INPUT

106

DICTIONARY (RISK, CONTRIBUTION, RANK)

FORECASTS (RESULTS)

PAST OPERATIONAL DATA

USER INPUT DETAILS

124

122

DATABASE

120

118

FIG. 1

200

202 — RECEIVE USER INPUT INDICATING
A SELECTED MEASURE

204 — IDENTIFY A PLURALITY OF DIMENSIONS

206 — RECEIVE GOAL DATA

208 — DETERMINE A RANK FOR EACH DIMENSION

210 — PROVIDE DIMENSIONS FOR
DISPLAY AS INDICATORS

FIG. 2

300

302

* Set GOAL: [ 10 ] %          Orientation: [ increase ▼ ]

314a  310                     314b  312

* Start date: [ 1/1/14 ] 🗓          * End date: [ 12/31/14 ] 🗓

306

304

**Select a measure (*)**

318

| Recommended Measures |
|---|
| Sales Growth |
| Stockout Count |
| Average Revenue |

320

| All measures | |
|---|---|
| Product | ⟨>⟩ |
| Financial | ✓ |
| Margin | |
| Revenue | |
| Total sales | |

**Select a dimension**

| All dimensions | |
|---|---|
| Financial | ⟨>⟩ |
| Location | ⟨>⟩ |
| Machine | ⟨>⟩ |
| Product | ⟨>⟩ |
| Time | ⟨>⟩ |

308

[ Next ] ~322

* (mandatory fields)

## FIG. 3

400

402

404 *Select a dimension

| Recommended dimensions | Rank |
|---|---|
| City > Barcelona | 4.4 |
| Sales type > Combo | 0.5 |
| Product type > Cola Light | 0.2 |

406

| All dimensions | |
|---|---|
| Financial | > |
| Location | > |
| Machine | > |
| Product | > |
| Time | > |

408 — Select another dimension | Done — 410

* (mandatory fields)

FIG. 4

ALERT!

504 → Stock of Cola in DKOM1 machine in Barcelona

500
450
400
350
300
250
200
150
100
50
0

January-13
February-13
March-13
April-13
May-13
June-13
July-13
August-13
September-13
October-13
November-13
December-13

Recommended actions
☐ send 245 more Colas on the 3rd of July from Warehouse1
☐ send 130 more Colas on the 3rd of July from Warehouse2
☐ send a notification to person in charge of DKOM1, Mike Peterson

506

Done  508

502

500

FIG. 5

FIG. 6

Europäisches
Patentamt
European
Patent Office
Office européen
des brevets

# EUROPEAN SEARCH REPORT

Application Number

EP 14 00 3145

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | "STATEMENT IN ACCORDANCE WITH THE NOTICE FROM THE EUROPEAN PATENT OFFICE DATED 1 OCTOBER 2007 CONCERNING BUSINESS METHODS - EPC / ERKLAERUNG GEMAESS DER MITTEILUNG DES EUROPAEISCHEN PATENTAMTS VOM 1.OKTOBER 2007 UEBER GESCHAEFTSMETHODEN - EPU / DECLARATION CONFORMEMENT AU COMMUNIQUE DE L'OFFICE EUROP", 20071101, 1 November 2007 (2007-11-01), XP007905525, * Statement in accordance with the Notice from the European Patent Office dated 1 October 2007 concerning business methods(OJ 11/2007; p592-593). The claimed-subject matter, with due regard to the description and drawings, relates to processes comprised in the list of subject-matter and activities excluded from patentability under Art.52 (2) and (3) EPC. The applicant is advised that in accordance with the established practice of the EPO, no search need be performed in respect of those aspects of the claimed invention. The only identifiable technical aspects of the claimed invention relate to the use of conventional, general-purpose data processing technology for processing data of an inherently non-technical nature. The information technology employed is considered to have been generally known as it was widely available to everyone at the date of filing/priority of the present application. The notoriety of such prior art cannot reasonably be contested. No documentary evidence was therefore considered required. * ----- | 1-15 | INV. G06Q10/06 |

TECHNICAL FIELDS SEARCHED (IPC)

G06Q

The present search report has been drawn up for all claims

| Place of search | Date of completion of the search | Examiner |
|---|---|---|
| The Hague | 19 December 2014 | Lozza, Mario |

EPO FORM 1503 03.82 (P04C01)